# EUROPEAN PATENT SPECIFICATION

(11) **EP 1 905 997 B1**
(45) Date of publication and mention of the grant of the patent: **21.07.2010**
(21) Application number: 07023338.2
(22) Date of filing: 10.03.2000
(51) Int. Cl.: F02K 1/00, F02K 9/00, F02K 9/44

(54) **Rocket engine**
Raketenmotor
Moteur fusée

(30) Priority: 10.03.1999 US 123621 P
(43) Date of publication of application: 02.04.2008
(62) Divisional of application: 00946747.3
(73) Proprietor: Williams International Co., L.L.C., Walled Lake, Michigan 48390 (US)
(72) Inventor: Stephens, Richard D., Vonore, TN 37885-2658 (US); Thompson, Robert S., Jr., White Lake, MI 48383 (US); Defever, Guido J., Commerce Township, MI 48382 (US); Jones, John F., (US); Musgrave, Dean S., Dearborn, MI 48124 (US); Williams, Gregg G., Bloomfield Hills, MI 48304 (US)
(74) Representative: Smith, Samuel Leonard

(56) References cited:
- US-A- 3 307 359
- US-A- 3 882 676
- US-A- 4 369 920
- US-A- 5 261 223
- US-A- 5 323 602
- US-A- 5 758 504

## Description

### TECHNICAL ART

The present invention generally relates to fluid propellant rocket engines and more particularly to fluid propellant rocket engines that integrate as a single unit the turbomachinery for pumping the fluid propellant together with the main combustion chamber of the rocket.

### BACKGROUND OF THE INVENTION

Liquid fuel rocket engines, for example as taught in U.S. Patent Nos. 4,879,874**,** 4,901,525**,** and 5,267,437 generally employ turbomachinery that is distinct from the main rocket nozzle for pressurizing and/or gasifying the liquid propellant prior to injection into the main rocket nozzle. Furthermore, one or more of the propellant components may be adapted to cool the main rocket nozzle through a associated plumbing circuitry. Accordingly, such systems are generally costly and complex, and the added complexity tends to reduce reliability.

U.S. Patents 3,541,793 and 3,577,735 teaches a turborocket engine wherein liquid propellants are pressurized by respective pumps that pressurize a liquid fuel and liquid oxidizer. One of the propellant components discharges first through the walls of the main combustion chamber for cooling purposes, and then into a precombustion chamber. A portion of the other propellant component is discharged in the precombustion chamber, and the remainder is discharged into the main combustion chamber. The effluent from the precombustion chamber drives a turbine that in turn drives the respective pumps. The effluent then discharges into the main combustion chamber. The discharge nozzles are stationary relative to the respective combustion chambers, which can result in temperature variations within the precombustion chamber than can be stressful to the turbine. Further, the use of liquid propellant for cooling the main combustion camber increases cost complexity and weight.

U.S. Patents 4,769,996 and 4,870,825 teach rotary liquid fuel injection systems that incorporate rotary pressure traps, however these systems are incorporated into turbine engines that utilize a gaseous oxidizer. Neither of these patents teach a turborocket engine that provides for rotary injection of both fuel and oxidizer component.

U.S. Patent 5,323,602 teaches an effusion cooling system for a gas turbine engine that uses air as the cooling medium. This patent does not teach a turborocket engine, nor does it teach the use of combustion gases from a precombustor for effusion cooling a main combustor.

US 3,882,676 A discloses a method of starting a liquid-fuel rocket engine of the so-called "main stream" construction which has at least one precombustion chamber, a main combustion chamber and a turbine located in the flow path of the gases between the two combustion chambers which is operated to drive the propellant component pumps and using at least one ignition chamber comprises, directing propellant components into the ignition chamber and igniting them to produce gases, preferably oxygen-rich gases, directing the produced gases to the precombustion chamber for flow therethrough and through the turbine and main combustion chamber to preheat them and to run the turbine to drive the propellant component pumps, and after the pumps come up to an operating speed,; discharging the propellant components to said precombustion chamber and said main combustion chamber to produce propellant gases in the preheated main combustion chamber. The apparatus which is employed includes valve controls, such as throttle valves, for regulating the supply of the components to the ignition chamber and for shutting off the ignition chamber from operation. The arrangement is such that the ignition chamber can be operated subsequently for the reignition of the rocket engine if desired.

A turborocket engine may be provided that integrates the functions usually associated with rocket propulsion main combustion chambers and the turbomachinery usually associated with the turbopumps used by liquid rocket engines into one unit, thereby eliminating most of the plumbing and cooling circuitry normally associated with liquid rocket engines. This results in a much lower cost and lower weight propulsion system than is provided by prior-art liquid rocket engines.

Liquid fuel and liquid oxidizer are provided from pressurized tanks at relatively low pressure to separate sections within a rotor system driven by a relatively low pressure ratio turbine that is powered the combustion effluent generated by a precombustor operated at a relatively rich fuel/oxidizer ratio such that the temperature of the partially combusted effluent can be tolerated by the turbine. The flow rates of liquid fuel and liquid oxidizer are controlled at the relatively low supply pressure with separate throttle control valves, which provides for improved control that is less costly and more reliable. Rotary pressure traps incorporated in the rotor system isolate the relatively low pressure outlets of the respective throttle control valves from the relatively high pressures of the precombustor and main combustor.

The rotor system imparts, by a centrifugal pumping means, rotational kinetic energy and centrifugal force to the liquid fuel and liquid oxidizer. The centrifugal pumping means comprises one or more longitudinal ribs or vanes on the inside surface of the outer wall of a hollow shaft portion with one or more discharge orifices in communication with one or more associated grooves formed between adjacent ribs or vanes. Generally the pressure drop across the discharge orifices is relatively small, and the discharge orifices are not necessarily filled with fluid during normal operation. Moreover, whereas there is generally a one-to-one relationship between grooves and discharge orifices, subject to the constraint of mechanical balance, either more than one discharge orifice, or no discharge orifices, may be in communication with a particular groove. Furthermore, whereas the discharge orifices are generally of uniform size and orientation, subject to the constraint of mechanical balance, different discharge orifices may be sized and oriented differently. The liquid is rotated by the ribs or vanes, and centrifugally accelerated through the discharge orifices, which imparts substantial radial and circumferential velocities to the injected liquids, thereby providing for complete mixing and distribution. The centrifugal pumping means of the present invention does not, however, incorporate a diffuser to convert kinetic energy back to pressure energy, as incorporated in many conventional centrifugal pumps. All of the liquid fuel and some of the liquid oxidizer is injected by rotary injection into the precombustor, and then mixed, vaporized, and partially combusted therein. The temperature of the effluent from the precombustor is controlled by the associated fuel/oxidizer mixture ratio. The rotary injection process provides for a more uniform temperature distribution within the associated toroidal combustion zones within the precombustor, thereby enabling the turbine to operate at a temperature closer to the material-dependent peak operating temperature.

Both the liquid fuel and the liquid oxidizer are centrifugally pumped. Accordingly, the rotor system incorporates concentric hollow sections, wherein the liquid oxidizer is supplied through and pumped from the center of a hollow main shaft, and the liquid fuel is pumped from an annular chamber concentric therewith. The elements of the centrifugal pumps, including the ribs/vanes and discharge orifices, are arranged and sized so as to not disturb the mechanical balance of the rotor system. However, the ribs/vanes and/or the discharge orifices may be non-uniformly spaced in accordance with this constraint.

A portion of the effluent from the precombustor is directed through the precombustor liner, over the outside of the main combustor liner, and into the main combustor through effusion cooling holes so as to cool the main combustor by effusion cooling. A portion of the fuel, either liquid or gaseous, may also be directed over the precombustor liner for cooling the precombustor, and then combined with the effluent stream used to cool the main combustor liner. Furthermore, a portion of the effusion cooling gases may be discharged in the main combustor so as to provide boundary layer cooling of the converging/diverging nozzle.

The relative amount of liquid oxidizer that is delivered to the precombustor and to the main combustor is set by the design of the liquid oxidizer distribution system within the main rotor system. The liquid oxidizer pump discharge is split at the pump exit, feeding the smaller portion of the flow to a rotating injection device which delivers the oxidizer to the precombustor. The rotating injection device also incorporates a rotary pressure trap to isolate the precombustor pressure from the main combustor pressure, thereby preventing the flow of precombustor gas therebetween through the rotary injection device. A portion of the liquid fuel is also fed into a similar rotating injection device proximate to the same axial plane, resulting in mixing and atomizing of the two liquids as they are slung from the shaft system. Combustion of the mixture occur simultaneously with this mixing and atomization. Additional liquid fuel is injected into the precombustor to assist in mixing and to control the mixture ratio to achieve the proper temperature as the gasses reach the turbine. Accordingly, the fuel/oxidizer mixture ratio may be controlled within specific zones within the precombustor, which provides for improved bum characteristics.

An igniter, such as a high temperature torch, is used to initiate combustion in the precombustor, after which the combustion is continuous and self-sustaining. The heat of combustion in the precombustor vaporizes the injected liquid fuel and liquid oxidizer injected therein, including any liquid fuel used for cooling the precombustor and/or main combustor liners.

The majority of the effluent from the precombustor flows directly into the main combustor after driving the turbine. This effluent and the gases used for cooling the precombustor and/or main combustor are combined and combusted with the remainder of the liquid oxidizer that is fed through the center of the hollow shaft connecting the pump elements to the turbine, and is injected by rotary injection directly into the main combustor as it exists the shaft through a centrifugal pumping device. This high speed rotary injection atomizes the liquid oxidizer which rapidly vaporizes and completes the combustion of the hot fuel rich gasses exiting the turbine directly into the main combustor. The end of the hollow shaft that is exposed to the hot combustion gases of the main combustor may be adapted to provide for the cooling or venting thereof by the discharge of gaseous oxidizer therefrom. The end of the hollow shaft may also or alternatively be polished or coated to provide thermal insulation from the hot combustion gases. The final or overall fuel/oxidizer mixture ratio is adjusted in accordance with a particular objective function, such as maximum thrust subject to constraints on the relative size of the associated propellant tanks.

It is possible to alternatively incorporate either a radial pump or an axial pump mounted on the outside of the shaft, prior to the precombustor, for pumping and injecting the liquid fuel into the turborocket engine. Furthermore, the liquid oxidizer pump can be located downstream of where the liquid oxidizer flow is divided between the precombustor and the main combustor.

While this description will illustrate the application of the present invention as a liquid propellant turborocket operating on liquid hydrogen and liquid oxygen, it will be understood by one with ordinary skill in the art that the present invention can also be applied to any liquid bi-propellant system comprising a liquid fuel and a liquid oxidizer.

### BRIEF DESCRIPTION OF THE DRAWINGS

**FIG. 1** illustrates an isometric cross-sectional view of a rocket engine in accordance with the present invention;
**FIG. 2a** illustrates a first cross-sectional view of a rocket engine in accordance with the present invention;
**FIG. 2b** illustrates a second cross-sectional view of a rocket engine in accordance with the present invention;
**FIG. 3** illustrates a first cross-sectional view of a rotor system in accordance with the present invention;
**FIG. 4** illustrates a cross-sectional view of third hollow shaft portion of the present invention;
**FIG. 5** illustrates a cross-sectional view of an annular dam portion of the present invention; and
**FIG. 6** illustrates a second cross-sectional view of a rotor system in accordance with the present invention;

### DETAILED DESCRIPTION OF THE PREFERRED EMBODIMENT

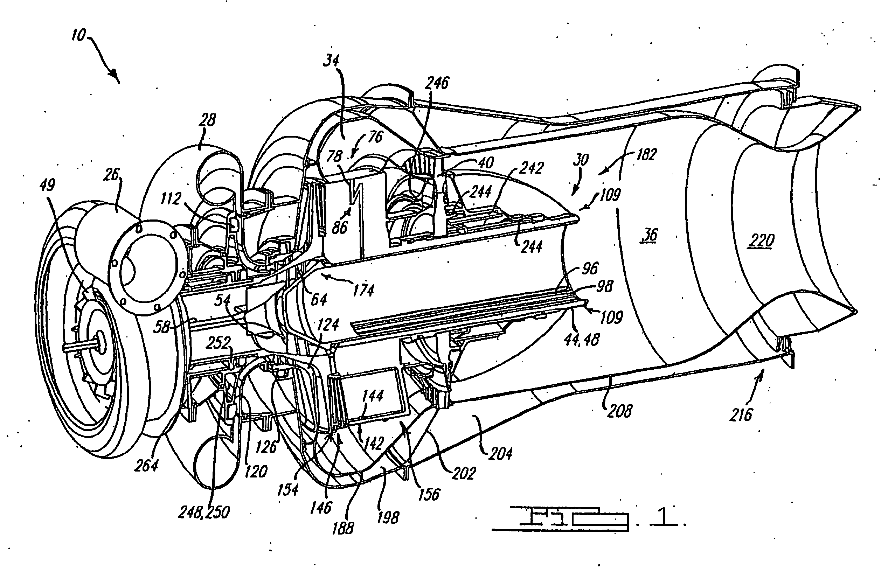

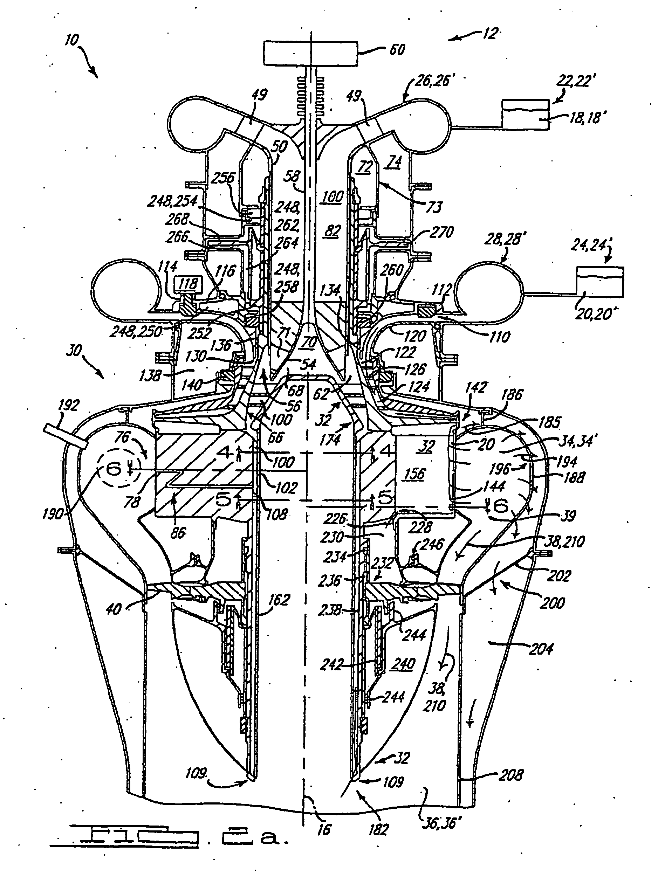

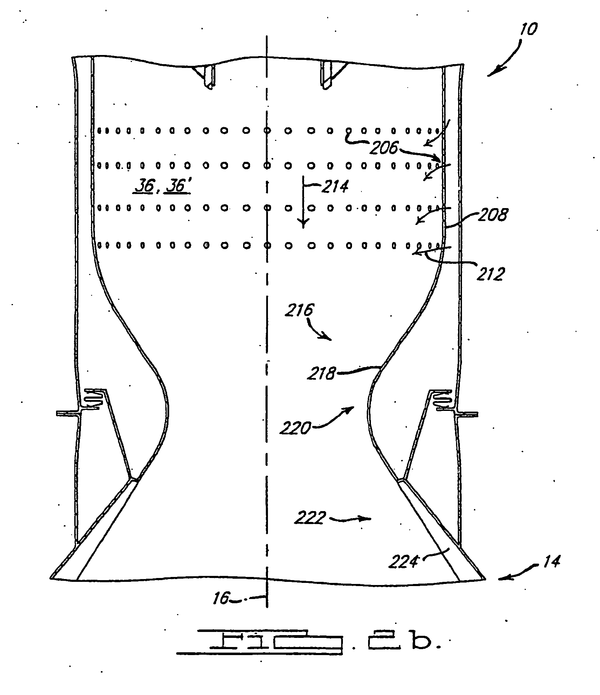

Referring to **Figs.** 1, **2a** and **2b****,** a **rocket engine 10** with a **first end 12** and a second **end** 14 directs thrust from the second end 14 along an **axis 16. First 18'** and second 20' **propellant components,** for example liquid **oxygen 18** and **liquid hydrogen 20** respectively, are fed from respective **sources 22', 24',** for example respective first and second pressurized **tanks 22, 24,** through respective **first 26'** and **second 28' inlets**, for example respective scrolls **26, 28,** and into a single **rotor system 30** that contains a **pumping means 32** for pumping the **liquid oxygen 18** and **liquid hydrogen 20** into **first 34'** and **second 36' combustion chambers,** for example a **precombustor 34** and a main **combustor 36** respectively. At least a portion of the **effluent 38** from the **outlet 39** of the **precombustor 34** drives a **turbine 40** that rotates the **rotor system 30.** All, or most, of the hydrogen is fed to the **precombustor 34** but the **precombustor 34** receives only sufficient oxygen to raise its afflux temperature to a level that can be easily tolerated by the **turbine 40.** The hydrogen rich **effluent 38** discharged by of the **turbine 40,** along with any hydrogen that bypasses the **turbine 40,** is fed to the main **combustor 36** where the remainder of the oxygen is introduced so as to provide an overall fuel/oxidizer mixture ratio within the **main combustor 36** appropriate for the particular fuel/oxidizer system, whereby the combustion within the **main combustor 36** provides the very high temperatures normally associated with rocket engines. For example, in a liquid hydrogen (LH₂)/liquid oxygen (LO₂) system, the oxidizer/fuel mass ratio is preferably about 5.5:1, but could be any known mixture ratio or range of mixture ratios capable of supporting combustion. For example, a mixture ratio of 2.8:1 LH₂:LO₂ provides for the highest impulse, albeit with the associated disadvantage of requiring undesirably large liquid hydrogen storage tanks.

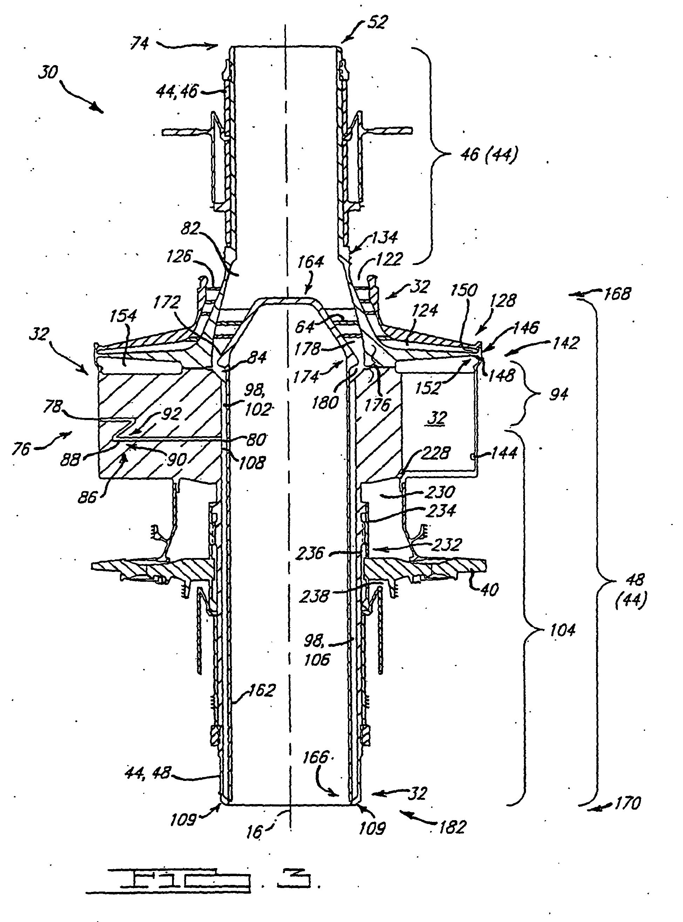

Referring to **Fig. 3****,** the **rotor system 30** comprises a **shaft 44** having **first 46** and **second 48 hollow shaft portions** adjacent and coupled and open to one another. The inside diameter of at least a portion of the **second hollow shaft portion 48** is greater than that of the **first hollow shaft portion 46. Liquid oxygen 18** is fed from the **oxygen tank 22** into the **oxygen scroll 26** at the **first end 12** of the **rocket engine 10** at a pressure of about 30 psig, through a plurality of **flow directing vanes 49,** and into a **stationary tube 50** that extends through and inside a **first end 52** of the **first hollow shaft portion 46**. The total quantity of oxygen supplied to the **rocket engine 10** is regulated by a moveable **conical throttle element 54** forming a controlled **first throttling restriction 56** that restricts the flow of oxygen from of the **stationary tube 50.** The **conical throttle element 54** is positioned by a **rod 58** actuated by a **first controller 60** from the **first end 12** of the **rocket**

### engine 10.

**Liquid oxygen 18** passing through the **first throttling restriction 56** is directed into an **interior 62** of the second **hollow shaft portion 48** of the rotating **shaft 44,** which contains a **first inducer 64** comprising at least one screw-like vane that provides combined axial and rotational acceleration of the **liquid oxygen 18** so as to induce the **liquid oxygen 18** to rotate with the **shaft 44,** while minimizing the joule heating and resulting vaporization as a result of mechanical agitation by the inducing process. The rotation of the **shaft 44** generates centrifugal forces that cause the **liquid oxygen 18** to gravitate towards the **inside surface 66** of the **shaft 44** thereby driving any **oxygen vapor 68** towards the **center 70** of the **shaft 44**, which is vented by at least one **vent duct 71** towards the outside of the **stationary tube 50.** Because the **first hollow shaft portion 46** is smaller in inside diameter than the **second hollow shaft portion 48,** the centrifugal separation of **liquid oxygen 18** and **oxygen vapor 68** causes the rotating **first hollow shaft portion 46** to fill with **oxygen vapor 68,** which discharges into a fixed **first annular vent chamber 72,** through a **vent port 73,** and into a fixed **second annular vent chamber 74,** from where the **oxygen vapor 68** is vented from the **rocket engine 10.**

A **first rotary injector 76** coupled to the **shaft 44,** particularly to the **second hollow shaft portion 48,** within the **precombustor 34** comprises at least one **first rotary orifice 78** in fluid communication with an **inlet 80** and with the **precombustor 34**. The **inlet 80** of the **first rotary injector 76** is in fluid communication with the **oxygen scroll 26** that supplies **liquid oxygen 18** through an associated fluid path in the respective **interiors 82, 62** of the **first 46** and **second 48 hollow shaft portions**. The **first rotary orifice 78** rotates with the **shaft 44** about the **axis 16** thereof. The **first rotary injector 76** further comprises at least one **first rotary pressure trap 86** comprising a **first fluid passage 88** having an **inlet 90** and an **outlet 92** in fluid communication there through along a length thereof. The **first fluid passage 88** is adapted so that when rotated about the **axis of rotation 16,** a centrifugal acceleration at any point within the **first fluid passage 88** is greater than a centrifugal acceleration at either the **inlet 90** or the **outlet 92** thereof.

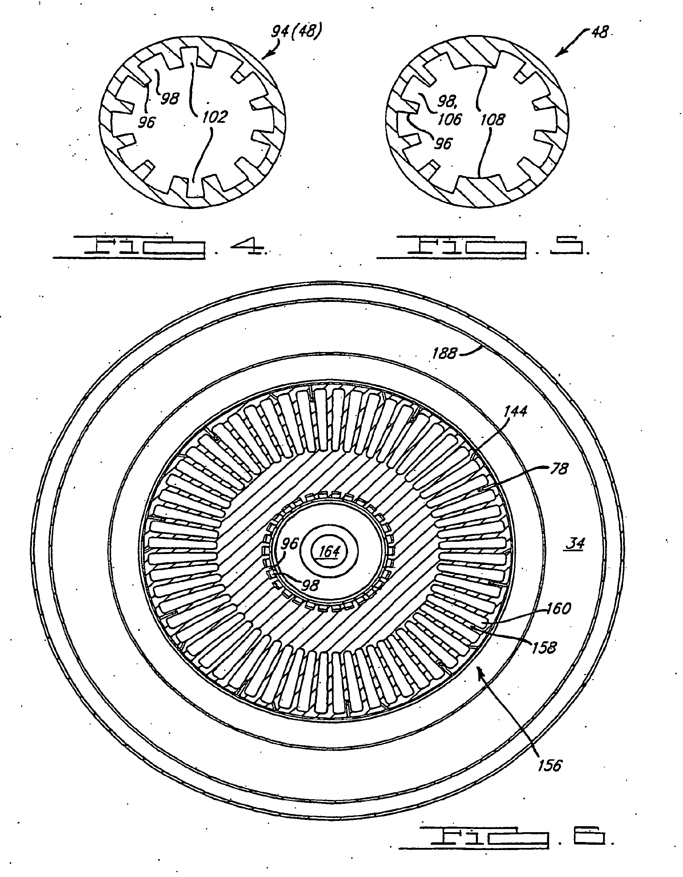

Referring to **Figs. 1** and **4****,** the **second hollow shaft portion 48** further comprises a **third hollow shaft portion 94** comprising a plurality of **longitudinal ribs 96** and grooves **98** on the inside thereof. The **longitudinal grooves 98** constitute a portion of a **fluid passage 100** between the **oxygen scroll 26** and the **first rotary injector 76.** For uniformly sized **longitudinal grooves 98,** each **longitudinal groove 98** receives an equal flow of **liquid oxygen 18** from the **first inducer 64.** However, the **longitudinal grooves 98** may be non-uniformly sized - within the constraint of rotational balance, - resulting in corresponding nonuniform liquid oxygen flow rates within the respective **longitudinal grooves 98.** At least one **first groove 102** is in fluid communication with the **inlet 80** of the **first rotary injector 76.** The **second hollow shaft portion 48** further comprises a **fourth hollow shaft portion 104** into which at least one **second groove 106** extends from the **third hollow shaft portion 94** to **fourth hollow shaft portion 104** along the inside thereof. Referring to **Fig. 5****,** those **first grooves 102** that do not extend into the fourth **hollow shaft portion 104** are blocked at by associated **annular dam segments 108** between the **third 94** and **fourth 104 hollow shaft portions.**

**Liquid oxygen 18** flowing along the **first grooves 102** discharges through the respective **first rotary orifices 78** into the **precombustor 34.** The remaining **liquid oxygen 18** flowing along the **longitudinal grooves 98,** particularly the **second grooves 106,** discharges through respective **third rotary orifices 109** into the **main combustor 36,** wherein the relative flows of **liquid oxygen 18** into the **precombustor 34** and the **main combustor 36** are adapted to control the mixture ratios in the respective combustion chambers, particularly so that the mixture in the **precombustor 34** is substantially richer, and burns at a substantially lower temperature, than the mixture in the **main combustor 36.** This arrangement precludes the need for separate servo-control of liquid oxygen flow into the **precombustor 34.** Preferably, for each **longitudinal groove 98** that is discharged through a **first rotary orifice 78** into the **precombustor 34**, approximately five (5) **longitudinal groove 98** discharge through the **third rotary orifices 109** into the **main combustor 36.** The radial injection of **Liquid oxygen 18** from the rotating **shaft 44** into both the **precombustor 34** and the **main combustor 36** provides for even circumferential distribution and atomization thereof therein.

Referring to Figs. 1, 2a and 2b, liquid hydrogen 20 is delivered from the associated pressurized hydrogea tank 24 intro the hydrogen scroll 28 at a pressure of approximately 15 psig. The liquid hydrogen 20 flows radially inward from the hydrogen scroll 28 through a second throttling restriction 110 controlled by throttle ring 112 that is positioned by at least one control rod 11.4 through the case 116 and connected to a second controller 118.

Downstream of the second throttling restriction 110, the liquid hydrogen 20 flows through a curved annular flow diverter 120 that redirects the flow from radially inward to axial. Th3 curved annular flow diverter 120 may incorporate vanes to impart pre-swirl to the flow. The liquid hydrogen 20 discharges from the curved annular flow diverter 120 into the interior 122 of an annular duct 124 in the rotor system 30 and into a second inducer 126 contained therein and rotating therewith. The second inducer 126 comprises at least one screw-like vane that provides combined axial and rotational acceleration of the liquid hydrogen 20 so as to induce the liquid hydrogen 20 to rotate with the shaft 44, while minimizing the joule heating and resulting vaporization as a result of mechanical agitation by the inducing process. Downstream of the second inducer 126, the annular duct 124 expands in diameter, wherein centrifugal forces cause liquid hydrogen 20 within the angular duct 124 to gravitate towards the outermost legion 128 thereof, thereby displacing hydrogen vapor 130 therein towards the interior 122 thereof.

A first labyrinth seal 134 disposed between the outside of the second hollow shaft portion 48 and the structure of the curved annular flow diverter 120 meters the leakage of hydrogen vapor 130 from the annular duct 124 through a first vent duct 136 into an third annular vent chamber 138 frown where the hydrogen vapor 130 is vented from the rocket engine 10. A first seal 140, for example a carbon seal, operative between the outside of the rotatable annular duct 124 and the fixed third Annular vent chamber 138, seals against the leakage of hydrogen from the fixed annular flow diverter 120, around the rotatable annular duct 124 and into the fixed third aunular vent chamber 138.

The main liquid hydrogen flow is delivered outwardly from the rotatable annular duct 124 into a second rotary injector 142 coupled to the shaft 44, particularly to the second hollow shaft portion 48, within the precombustor 34. The second rotary injector 142 comprises at least one second rotary orifice 144 in fluid communication with the annular **duct 124** and with the **precombustor 34.** The **second rotary orifice 144** rotates with the **shaft 44** about the **axis 16** thereof. The **second rotary injector 142** further comprises at least one **second rotary pressure trap 146** comprising a **second fluid passage 148** having an **inlet 150** and an **outlet 152** in fluid communication there through along a length thereof. The **second fluid passage 148** is adapted so that when rotated about the **axis of rotation 16,** a centrifugal acceleration at any point within the **second fluid passage 148** is greater than a centrifugal acceleration at either the **inlet 150** or the **outlet 152.** Referring to Figs. **2a****,** **3** and **6****,** each **outlet 152** of each **second rotary pressure trap 146** is in fluid communication with an **annular manifold 154,** which is in fluid communication with an **annular chamber 156** partitioned by a plurality of **radial vanes 158** into a plurality of **radial chambers 160,** at least some of which discharge into respective **second rotary orifices 144.**

In operation, the **radial vanes 158** cause liquid **hydrogen 20** within the **annular chamber 156** to rotate therewith, and the resulting centrifugal force produces a large pressure gradient in the rotating **liquid hydrogen 20** and a high discharge pressure at the **second rotary orifices 144.** The **second rotary orifices 144** are preferably disposed at various axial locations so as to provide for improved mixing and combustion within the **precombustor 34.** Furthermore, a portion or all of the **second rotary orifices 144** may be angulated relative to a radial direction. The locations, orientations, and sizes of the associated **second rotary orifices 144** are adapted so that the **rotor system 30** is mechanically balanced.

At normal flow rates, **liquid hydrogen 20** does not completely fill either the **annular duct 124** or the **annular chamber 156,** which collectively act as a vapor core pump. The **second fluid passage 148** of the **second rotary pressure trap 146** remains loaded with **liquid hydrogen 20** so as to prevent backflow of high pressure vapor from the region downstream of the **second rotary pressure trap 146.**

The **second hollow shaft portion 48** further comprises a **shaft liner 162** having a **closed end 164** and a **second end 166,** each respectively proximate to a **first end 168** and a **second end 170** of the second **hallow shaft portion 48,** wherein the **closed end 164** of the **shaft liner 162** is shaped so as to form a **boundary 172** of a **third rotary pressure trap 174.** The **third rotary pressure trap 174** comprises a **third fluid passage 176** having an **inlet 178** an an **outlet 180** in fluid communication there through along a length thereof. The third **fluid passage 176** is adapted by the **boundary 172** so that when rotated about the **axis of rotation 16** a centrifugal acceleration at any point within the **third fluid passage 176** is greater than a centrifugal acceleration at either the **inlet 178** or the **outlet 180.**

A **third rotary injector 182,** located within the **main combustor 36** comprises at least one **third rotary orifice 109** at the **second end 170** of the **second hollow shaft portion 48** in fluid communication with at least one **second groove 106** and with the **main combustor 36**, wherein the at least one **second groove 106** is in fluid communication with the outlet **180** of the **third rotary pressure trap 174** in the fluid path from the **oxygen scroll 26** that supplies **liquid oxygen 18** to the **third rotary orifice 109.** The **third rotary orifice 109** is coupled to the **shaft 44,** particularly to the **fourth hollow shaft portion 104**, and rotates with the **shaft 44** about the **axis 16** thereof.

In operation, **liquid oxygen 18** from the pressurized **oxygen tank 22** through the interior of the **stationary tube 50** inside the **first hollow shaft portion 46** discharges outwardly from the **first throttling restriction 56** into the **second hollow shaft portion 48** and is rotationally accelerated by the **first inducer 64** causing the **liquid oxygen 18** to rotate with the **shaft 44.** Resulting centrifugal forces pressurize the **liquid oxygen 18** in proportion to the square of the radius from the **center 70** of the **shaft 44,** causing the **liquid oxygen 18** to flow along the inside surface of the **second hollow shaft portion 48. Liquid oxygen 18** fills the **third fluid passage 176** of the **third rotary pressure trap 174,** and with a sufficient shaft speed, the **third fluid passage 176** remains sufficiently full of **liquid oxygen 18** to isolate high pressures of the **main combustor 36** downstream of the third **rotary pressure trap 174** from the relatively low pressure of the **liquid oxygen 18** upstream of the **third rotary pressure trap 174.**

In accordance with the teachings of U.S. Patent No. 4,870,825**,** - incorporated herein by references, - a rotary pressure trap comprises a fluid passage with an inlet and an outlet, wherein the fluid passage adapted so the when the rotary pressure trap is rotated, a centrifugal acceleration at any point within the fluid passage is greater than a centrifugal acceleration at any point on either the inlet or the outlet. Accordingly, when the fluid passage is filled with a relatively high density medium, such as a liquid, the radial levels of the inlet and outlet will be equal when there is no pressure differential therebetween, and will be otherwise unequal by an amount dependent upon the magnitude of the pressure differential and the speed of rotation. Accordingly, for a relatively low pressure liquid supply to an inlet of a rotary pressure trap feeding a relatively high pressure region at the outlet, the rotary pressure trap can prevent vapor from backflowing therethrough.

Accordingly, the **first rotary pressure trap 86** isolates the **liquid oxygen 18** at the **inlet 80** of the **first rotary injector 76** at the pressure of the **main combustor 36** from the relatively higher pressure gases in the **precombustor 34**. Similarly, the **second rotary pressure trap 146** isolates the **liquid hydrogen 20** in the **annular duct 124** at the supply pressure from the relatively higher pressure gases in the **precombustor 34**. Moreover, the **third rotary pressure trap 174** isolates the **liquid oxygen 18** from the **first throttling restriction 56** at the supply pressure from the relatively higher pressure gasses in the **precombustor 34.**

Preferably, the **second rotary orifices 144** discharge entirely within the **precombustor 34.** However, some of the **second rotary orifices 144** may be adapted so as to discharge a **bypass flow 185** of **liquid hydrogen 20** through a **first port 186** leading over the outside the **precombustor liner 188** for purposes of cooling both the **precombustor 34** and the **main combustor 36.** Up to 50% of the hydrogen flow may be directed outside the **precombustor liner 188** and the remainder is discharged into the **precombustor 34** proximate to the **first rotary orifices 78** from which **liquid oxygen 18** is discharged. The **rotor system 30** rotating at a high angular speed imparts a substantial tangential velocity to the **liquid hydrogen 20 and liquid oxygen 18** discharging therefrom, resulting in a well-mixed hydrogen/oxygen mixture within **toroidal zones 190** within the **precombustor 34,** which maintains combustion once ignited by an **igniter 192,** such as a chemical torch or an electrical spark or plasma device.

A **first portion 194** of the **effluent 38** from the **precombustor 34** flows through at least one **first orifice 196** in the **precombustor liner 188,** into a **first annular passage 198** at least partially surrounding the **precombustor liner 188,** through a **second port 200** in the **combustor liner support structure 202,** into a **second annular passage 204,** through a plurality of **effusion cooling holes 206** in the **main combustor liner 208.**

The **effluent 38** from the **precombustor 34** is a very rich (i.e., excess hydrogen) mixture at a moderate temperature -- for example 1,200° F. A **second portion 210** of the **effluent 38** is directed through a lightly loaded single stage axial **turbine 40** which develops substantially only sufficient power to drive the **pumping means 32** inherent in the hydrogen and oxygen flow paths, wherein the **pumping means 32** comprises the various inducers and the ribbed and vaned sections of the **rotor system 30** that impart kinetic energy to the **liquid oxygen 18** and the **liquid hydrogen 20.**

The pressure drop through the **turbine 40** is sufficient to cause the **first portion 194** of the **effluent 38** from the relatively higher pressure **precombustor 34** to flow into the relatively lower pressure **main combustor 36.** The **bypass flow 185** of **liquid hydrogen 20** directed outside the **precombustor liner 188** absorbs sufficient heat to cause that **liquid hydrogen 20** to vaporize from the heat of the **precombustor liner 188** and from the **first portion 194** of the **effluent 38** flowing into the **precombustor liner 188.**

The relatively rich **second portion 210** of **effluent 38** discharged from the **turbine 40** into the **main combustor 36** mixes with the relatively rich **effusion cooling gases 212** from the **effusion cooling holes 206,** and with the **liquid oxygen 18** that is rotationally discharged from the at least one **third rotary orifice 109** so as to produce a high temperature **effluent 214** necessary to achieve good propulsion efficiency. This high temperature **effluent 214** is expanded through a **converging/diverging nozzle 216** in a conventional fashion. The **surface 218** of the **converging/diverging nozzle 216** as far down as the **nozzle throat 220** is cooled by the **effusion cooling gases 212** flowing along the **main combustor liner 208.** The **diverging portion 222** of the **converging/diverging nozzle 216** is preferably lined with replaceable **ablative material 224.**

A small portion of the cold **hydrogen vapor 226** from the **annular chamber 156** flows through at least one second **orifice 228** into a **second annular chamber 230,** then through at least one **third orifice 232** in a splined **bushing 23**4 supporting the **turbine 40,** through a **third annular chamber 236** within the **bushing 234,** through at least one **fourth orifice 238** in the **bushing 234,** into the **turbine end bearing enclosure 240** to cool the foil **first axial bearing 242,** through a plurality of **second labyrinth seals 244,** and into the **main combustor 36.** The **turbine end bearing enclosure 240** is also sealed from the **precombustor 34** with a **third labyrinth seal 246.**

At least one annular buffer chamber filled with a **pressurized inert gas 248,** for example helium, is provided for isolating the **first 18'** and **second 20' propellant components** so as to prevent the formation of a flammable mixture therebetween at a location other than within the **first 34' or second 36' combustion chambers**. The pressure of the **pressurized inert gas 248** in the at least one annular buffer chamber is higher than the pressure of either propellant component in a chamber adjacent thereto. Referring to **Fig. 2a****, a first annular buffer chamber 250** is adapted to receive a stream of **pressurized inert gas 248,** which is directed at a small **impulse turbine 252** for starting the **rocket engine 10. Pressurized inert gas 248** in a **second annular buffer chamber 254** is sealed from the oxygen supply by a **second seal 256,** for example a carbon seal, between the **first annular vent chamber 72** and the **second annular buffer chamber 254. Pressurized inert gas 248** in a **third angular buffer chamber 258** is sealed from the hydrogen supply by a **third seal 260,** for example a carbon seal, between the **third annular vent chamber 138** and the **third annular buffer chamber 258. Pressurized inert gas 248** in at least one **fourth annular buffer chamber 262** cools a foil **second axial bearing 264** and foil **first 266 and second 268 thrust bearings** that bear against a **thrust reaction rotor 270.**

In an exemplary system, liquid hydrogen at approximately 40 psig flowing from a pressurized tank at a flow rate of approximately 9.3 pounds per second to the precombustor reacts with liquid oxygen fed from a pressurized tank at approximately 40 psig at a flow rate of approximately 9.3 pounds per second to the precombustor to generate an effluent with a temperature of approximately 1300° F at a pressure of approximately 220 psig. This effluent from the precombustor drives the turbine that imparts rotational kinetic energy to the liquid propellant components. The effluent from the precombustor then further reacts in the main combustor with an additional 41.8 pounds per second of oxygen to produce an effluent with a temperature of approximately 5400° F at a pressure of approximately 200 psig., which provides approximately 25,000 pounds of thrust in a vacuum.

One of ordinary skill in the art will appreciate that the present invention can be readily adapted for liquid fuels other than liquid hydrogen, and liquid oxidizers other than liquid oxygen. Accordingly, if operated with liquid fuels that are relatively denser from the associated liquid oxidizer than liquid hydrogen is relative to liquid oxygen, the diameter of the annular chambers associated with the liquid fuel pumping and delivery system would be relatively smaller with respect to the diameter of the chamber/shaft carrying the liquid oxidizer. Moreover, the preferred geometry will depend upon the speed of operation and the associated properties of the propellant components at the operating pressures and temperatures.

While specific embodiments have been described in detail in the foregoing detailed description and illustrated in the accompanying drawings, those with ordinary skill in the art will appreciate that various modifications and alternatives to those details could be developed in light of the overall teachings of the disclosure. Accordingly, the particular arrangements disclosed are meant to be illustrative only and not limiting as to the scope of the invention, which is to be given the full breadth of the appended claims.

## Claims

1. A rocket engine (10), comprising:
a. a first combustion chamber (34, 34') comprising
i. an outlet (39); and
ii. a first combustion chamber liner (188) comprising at least one first orifice (196);
b. a first annular passage (198) at least partially surrounding said first combustion chamber liner (188);
c. a second combustion chamber (36, 36') in fluid communication with said outlet (39) of said first combustion chamber (34, 34'), wherein said second combustion chamber (36, 36') comprises a second combustion chamber liner (208) comprising at least one second orifice (206); and
d. a second annular passage (204) at least partially surrounding said second combustion chamber liner (208), wherein said second annular passage (204) is in fluid communication with said first annular passage (198), whereby when operating, said first combustion chamber (34, 34') generates an effluent (38), a first portion (194, 212) of said effluent (38) is discharged through said at least one first orifice (196), through said first (198) and second (204) annular passages, through said at least one second orifice (206), and into said second combustion chamber (36, 36') so as to provide for effusion cooling of said second combustion chamber liner (208).

2. A rocket engine (10) as recited in claim 1, further comprising a flow restriction (40) between said first (24, 24') and second (36, 36') combustion chambers, whereby when operating, a second portion (210) of said effluent (38) from said first combustion chamber (34, 34') flows into said second combustion chamber (36, 36') through said flow restriction (40) so that a pressure in said first combustion chamber (34, 34') at said at least one first orifice (196) is greater than a pressure in said second combustion chamber (36, 36') at said at least one second orifice (206).

3. A rocket engine (10) as recited in either of claims 1 or 2, wherein said flow restriction (40) comprises a turbine (40) having an inlet and an outlet, said inlet is in fluid communication with said outlet (39) of said first combustion chamber (34, 34'), and said second combustion chamber (36, 36') is in fluid communication with said outlet of said turbine (40), whereby said turbine (40) is driven by at least a portion of said second portion (210) of said effluent (38) from said first combustion chamber (34, 34').

4. A rocket engine (10) as recited in any of claims 1 through 3, further comprising a source (22, 22') of a first propellant component (18, 18'), wherein said source (22, 22') of said first propellant component (18, 18') is in fluid communication with said first combustion chamber (34, 34') and with said first annular passage (198), whereby when operating, a portion (185) of said first propellant component (18, 18') flows into said first annular passage (198), into said second annular passage (204), through said at least one second orifice (206), and into said second combustion chamber (36, 36') so as to provide for effusion cooling of said second combustion chamber lined (208).

5. A rocket engine (10) as recited in any of claims 1 through 4, further comprising a source (24, 24') of a second propellant component (20, 20'), wherein said source (24, 24') of said second propellant component (20, 20') is in fluid communication with said first combustion chamber (34; 34'), whereby when operating, a first portion of said second propellant component (20, 20') flows into said first combustion chamber (34, 34'), and a remaining second portion of said second propellant component (20, 20') flows into said second combustion chamber (36, 36'), wherein a temperature of combustion in said first combustion chamber (34, 34') is less than a temperature of combustion in said second combustion chamber (36, 36').

6. A rocket engine (10) as recited in any of claims 1 through 5, wherein said second portion of said second propellant component (20, 20') flows into said second combustion chamber (36, 36') at an intermediate location of said second combustion chamber (36, 36') so that the combustion of a first portion of a second portion (210) of said effluent (38) from said first combustion chamber (34, 34') is isolated from said second combustion chamber liner (208) by an effluent (38) selected from the group consisting of a second portion of said second portion (210) of said effluent (38) from said first combustion chamber (34, 34'), and said first portion (194, 212) of said effluent (38) from said first combustion chamber (34, 34').

7. A method of cooling a rocket engine (10), comprising:
a. generating effluent (38) in a first combustion chamber (34, 34') by partial combustion of a plurality of propellant components (18, 18', 20, 20'), wherein said first combustion chamber (34, 34') has a first combustion chamber liner (188) comprising at least one first orifice (196), said at least one first orifice (196) is in fluid communication with a first region (198) outside of said first combustion chamber liner (188);
b. discharging a first portion (210) of said effluent (38) from said first combustion chamber (34, 34') into a second combustion chamber (36, 36'), wherein said second combustion chamber (36, 36') has a second combustion chamber liner (208), said first region (198) outside of said first combustion chamber liner (188) is in fluid communication with a second region (204) outside of said second combustion chamber liner (208), said second combustion chamber liner (208) comprises at least one second orifice (206) between said second region (204) and said second combustion chamber (36, 36'); and
c. discharging a second portion (194, 212) of said effluent (38) from said first combustion chamber (34, 34') through said at least one first orifice (196), through said first region (198) and over the outside of at least a portion of said first combustion chamber liner (188), through said second region (204) and over the outside of at least a portion of said second combustion chamber liner (208), through said at least one second orifice (206), and into said second combustion chamber (36, 36'), so as to provide for effusion cooling of said second combustion chamber liner (208).

8. A method of cooling a rocket engine (10) as recited in claim 7, wherein said first portion (210) of said effluent (38) is discharged from said first combustion chamber (34, 34') into said second combustion chamber (36, 36') through a flow restriction (40), whereby a pressure of said effluent (38) in said first combustion chamber (34, 34') at said at least one first orifice (196) is greater than a pressure in said second combustion chamber (36, 36') at said at least one second orifice (206).

9. A method of cooling a rocket engine (10) as recited in either of claims 7 or 8, wherein said plurality of propellant components (18, 18', 20, 20') comprise a fuel (20, 20') and an oxidizer (18, 18'), and a ratio of said fuel (20, 20') and said oxidizer (18, 18') in said first combustion chamber (34, 34') substantially fuel rich compared to a stoichiometric ratio.

10. A method of cooling a rocket engine (10) as recited in claim 9, wherein a first portion of said fuel (20, 20') is discharged into said first combustion chamber (34, 34'), and a second portion (185) of said fuel (20, 20') is discharged into said first region (198) outside of said first combustion chamber liner (188).

11. A method of cooling a rocket engine (10) as recited in either of claims 9 or 10, further comprising discharging at least a portion of an oxidizer (18, 18') into said second combustion chamber (36, 36'), and modifying at least one characteristic of said first portion (210) of said effluent (38) from said first combustion chamber (34, 34') into said second combustion chamber (36, 36') by said operation of discharging said portion of said oxidizer (18, 18') into said second combustion chamber (36, 36'), wherein said at least one characteristic is selected from the group consisting of a flow pattern and a mixture pattern.

12. A method of cooling a rocket engine (10) as recited in any of claims 7 through 11, further comprising modifying at least one characteristic of said first portion (210) of said effluent (38) from said first combustion chamber (34, 34') into said second combustion chamber (36, 36') by said operation of discharging said second portion (194) of said effluent (38) through said at least one second orifice (206) into said second combustion chamber (36, 36'), wherein said at least one characteristic is selected from the group consisting of a flow pattern and a mixture pattern.

## Patentansprüche

1. Raketentriebwerk (10), enthaltend:
a. eine erste Brennkammer (34, 34'), enthaltend
i. einen Auslass (39); und
ii. eine erste Brennkammerauskleidung (188) mit wenigstens einer ersten Öffnung (196);
b. einen ersten ringförmigen Durchgang (198), der die erste Brennkammerauskleidung (188) wenigstens teilweise umgibt;
c. eine zweite Brennkammer (36, 36'), die mit dem Auslass (39) der ersten Brennkammer (34, 34') in Fluidverbindung steht, wobei die zweite Brennkammer (36, 36') eine zweite Brennkammerauskleidung (208) mit wenigstens einer zweiten Öffnung (206) enthält; und
d. einen zweiten ringförmigen Durchgang (204), der die zweite Brennkammerauskleidung (208) wenigstens teilweise umgibt, wobei der zweite ringförmige Durchgang (204) mit dem ersten ringförmigen Durchgang (198) in Fluidverbindung steht, wobei im Betrieb die erste Brennkammer (34, 34') eine Ausströmung (38) erzeugt, wobei ein erster Teil (194, 212) der Ausströmung (38) durch die wenigstens eine erste Öffnung (196), durch den ersten (198) und den zweiten (204) ringförmigen Durchgang, durch die wenigstens eine zweite Öffnung (206) und in die zweite Brennkammer (36, 36') zum Vorsehen von Effusionskühlen der zweiten Brennkammerauskleidung (208) abgelassen wird.

2. Raketentriebwerk (10) nach Anspruch 1, ferner enthaltend einen Strömungsbegrenzer (40) zwischen der ersten (24, 24') und der zweiten (36, 36') Brennkammer, wobei im Betrieb ein zweiter Teil (210) der Ausströmung (38) aus der ersten Brennkammer (34, 34') in die zweite Brennkammer (36, 36') durch den Strömungsbegrenzer (40) derart strömt, dass ein Druck in der ersten Brennkammer (34, 34') an der wenigstens einen ersten Öffnung (196) größer ist als ein Druck in der zweiten Brennkammer (36, 36') an der wenigstens einen zweiten Öffnung (206).

3. Raketentriebwerk nach einem der Ansprüche 1 oder 2, wobei der Strömungsbegrenzer (40) eine Turbine (40) enthält, die einen Einlass und einen Auslass aufweist, wobei der Einlass mit dem Auslass (39) der ersten Brennkammer (34, 34') in Fluidverbindung steht, und die zweite Brennkammer (36, 36') mit dem Auslass der Turbine (40) in Fluidverbindung steht, wobei die Turbine (40) durch wenigstens einen Teil des zweiten Teils (210) der Ausströmung (38) aus der ersten Brennkammer (34, 34') angetrieben wird.

4. Raketentriebwerk (10) nach einem der Ansprüche 1 bis 3, ferner enthaltend eine Quelle (22, 22') einer ersten Treibstoffkortlponente (18, 18'), wobei die Quelle (22, 22') der ersten Treibstofflcomponente (18, 18') mit der ersten Brennkammer (34, 34') und mit dem ersten ringförmigen Durchgang (198) in Fluidverbindung steht, wobei im Betrieb ein Teil (185) der ersten Treibstofflcomponente (18, 18') in den ersten ringförmigen Durchgang (198), in den zweiten ringförmigen Durchgang (204), durch die wenigstens eine zweite Öffnung (206) und in die zweite Brennkammer (36, 36') zum Vorsehen von Effusionskühlen der zweiten Brennkammerauskleidung (208) strömt.

5. Raketentriebwerk (10) nach einem der Ansprüche 1 bis 4, ferner enthaltend eine Quelle (24, 24') einer zweiten Treibstoffkomponente (20, 20'), wobei die Quelle (24, 24') der zweiten Treibstoffkomponente (20, 20') mit der ersten Brennkammer (34, 34') in Fluidverbindung steht, wobei im Betrieb ein erster Teil der zweiten Treibstoffkomponente (20, 20') in die erste Brennkammer (34, 34') hineinströmt und ein verbleibender zweiter Teil der zweiten Treibstoffkomponente (20, 20') in die zweite Brennkammer (36, 36') strömt, wobei eine Verbrennungstemperatur in der ersten Brennkammer (34, 34') geringer ist als eine Verbrennungstemperatur in der zweiten Brennkammer (36, 36').

6. Raketentriebwerk (10) nach einem der Ansprüche 1 bis 5, wobei der zweite Teil der zweiten Treibstoffkomponente (20, 20') in die zweite Brennkammer (36, 36') an einer Zwischenstelle der zweiten Brennkammer (36, 36') strömt, so dass die Verbrennung eines ersten Teils eines zweiten Teils (210) der Ausströmung (38) aus der ersten Brennkammer (34, 34') von der zweiten Brennkammerauskleidung (208) durch eine Ausströmung (38) getrennt ist, die aus der Gruppe ausgewählt ist, die einen zweiten Teil des zweiten Teils (210) der Ausströmung (38) aus der ersten Brennkammer (34, 34') und den ersten Teil (194, 212) der Ausströmung (38) aus der ersten Brennkammer (34, 34') enthält.

7. Verfahren zum Kühlen eines Raketentriebwerks (10), enthaltend:
a. Erzeugen einer Ausströmung (38) in einer ersten Brennkammer (34, 34') durch teilweise Verbrennung einer Vielzahl an Treibstoffkomponenten (18, 18', 20, 20'), wobei die erste Brennkammer (34, 34') eine erste Brennkammerauskleidung (188) aufweist, die wenigstens eine erste Öffnung (196) enthält, wobei die wenigstens eine erste Öffnung (196) mit einem ersten Gebiet (198) außerhalb der ersten Brennkammerauskleidung (188) in Fluidverbindung steht;
b. Ablassen eines ersten Teils (210) der Ausströmung (38) aus der ersten Brennkammer (34, 34') in eine zweite Brennkammer (36, 36'), wobei die zweite Brennkammer (36, 36') eine zweite Brennkammerauskleidung (208) aufweist, wobei das erste Gebiet (198) außerhalb der ersten Brennkammerauskleidung (188) mit einem zweiten Gebiet (204) außerhalb der zweiten Brennkammerauskleidung (208) in Fluidverbindung steht, wobei die zweite Brennkammerauskleidung (208) wenigstens eine zweite Öffnung (206) zwischen dem zweiten Gebiet (204) und der zweiten Brennkammer (36, 36') enthält; und
c. Ablassen eines zweiten Teils (194, 212) der Ausströmung (38) aus der ersten Brennkammer (34, 34') durch die wenigstens eine erste Öffnung (196), durch das erste Gebiet (198) und über die Außenseite wenigstens eines Bereichs der ersten Brennkammerauskleidung (188), durch das zweite Gebiet (204) und über die Außenseite wenigstens eines Bereichs der zweiten Brennkammerauskleidung (208), durch die wenigstens eine zweite Öffnung (206) und in die zweite Brennkammer (36, 36') zum Vorsehen von Effusionskühlen der zweiten Brennkammerauskleidung (208).

8. Verfahren zum Kühlen eines Raketentriebwerks (10) nach Anspruch 7, wobei der erste Teil (210) der Ausströmung (38) aus der ersten Brennkammer (34, 34') in die zweite Brennkammer (36, 36') durch einen Strömungsbegrenzer (40) abgelassen wird, wobei ein Druck der Ausströmung (38) in der ersten Brennkammer (34, 34') an der wenigstens einen ersten Öffnung (196) größer ist als ein Druck in der zweiten Brennkammer (36, 36') an der wenigstens einen zweiten Öffnung (206).

9. Verfahren zum Kühlen eines Raketentriebwerks (10) nach einem der Ansprüche 7 oder 8, wobei die Vielzahl an Treibstoffkomponenten (18, 18', 20, 20') einen Kraftstoff (20, 20') und ein Oxidationsmittel (18, 18') enthält, und ein Verhältnis des Kraftstoffs (20, 20') und des Oxidationsmittels (18, 18') in der ersten Brennkammer (34, 34') im Wesentlichen kraftstoffreich ist verglichen mit einem stöchiometrischem Verhältnis.

10. Verfahren zum Kühlen eines Raketentriebwerks (10) nach Anspruch 9, wobei ein erster Teil des Kraftstoffs (20, 20') in die erste Brennkammer (34, 34') abgelassen wird, und ein zweiter Teil (185) des Kraftstoffs (20, 20') in das erste Gebiet (198) außerhalb der ersten Brennkammerauskleidung (188) abgelassen wird.

11. Verfahren zum Kühlen eines Raketentriebwerks (10) nach einem der Ansprüche 9 oder 10, ferner enthaltend
Ablassen wenigstens eines Teils eines Oxidationsmittels (18, 18') in die zweite Brennkammer (36, 36') und Abändern wenigstens einer Kenngröße des ersten Teils (210) der Ausströmung (38) aus der ersten Brennkammer (34, 34') in die zweite Brennkammer (36, 36') durch den Ablassvorgang des Teils des Oxidationsmittels (18, 18') in die zweite Brennkammer (36, 36'), wobei die wenigstens eine Kenngröße aus der Gruppe ausgewählt wird, die ein Strömungsverhalten und ein Mischungsverhalten enthält.

12. Verfahren zum Kühlen eines Raketentriebwerks (10) nach einem der Ansprüche 7 bis 11, ferner enthaltend
Abändern wenigstens einer Kenngröße des ersten Teils (210) der Ausströmung (38) aus der ersten Brennkammer (34, 34') in die zweite Brennkammer (36, 36') durch den Ablassvorgang des zweiten Teils (194) der Ausströmung (38) durch die wenigstens eine zweite Öffnung (206) in die zweite Brennkammer (36, 36'), wobei die wenigstens eine Kenngröße aus der Gruppe ausgewählt wird, die ein Strömungsverhalten und ein Mischungsverhalten enthält.

## Revendications

1. Moteur de fusée (10), comprenant :
a. une première chambre de combustion (34, 34') comprenant
i. une sortie (39) ; et
ii. une première chemise de chambre de combustion (188) comprenant au moins un premier orifice (196) ;
b. un premier passage annulaire (198) entourant au moins partiellement ladite première chemise de chambre de combustion (188) ;
c. une seconde chambre de combustion (36, 36') en communication fluidique avec ladite sortie (39) de ladite première chambre de combustion (34, 34'), dans lequel ladite seconde chambre de combustion (36, 36') comprend une seconde chemise de chambre de combustion (208) comprenant au moins un second orifice (206) ; et
d. un second passage annulaire (204) entourant au moins partiellement ladite seconde chemise de chambre de combustion (208), dans lequel ledit second passage annulaire (204) est en communication fluidique avec ledit premier passage annulaire (198), de sorte qu'en fonctionnement, ladite première chambre de combustion (34, 34') génère un effluent (38), une première partie (194, 212) dudit effluent (38) est évacuée à travers ledit au moins un premier orifice (196), à travers lesdits premier (198) et second (204) passages annulaires, à travers ledit au moins un second orifice (206), et dans ladite seconde chambre de combustion (36, 36') de manière à permettre un refroidissement par effusion de ladite seconde chemise chambre de combustion (208).

2. Moteur de fusée (10) tel qu'exposé dans la revendication 1, comprenant en outre une restriction d'écoulement (40) entre lesdites première (34, 34') et seconde (36, 36') chambres de combustion, de sorte qu'en fonctionnement, une seconde partie (210) dudit effluent (38) provenant de ladite première chambre de combustion (34, 34') s'écoule dans ladite seconde chambre de combustion (36, 36') à travers ladite restriction d'écoulement (40) de sorte qu'une pression dans ladite première chambre de combustion (34, 34') sur ledit au moins un premier orifice (196) est supérieure à une pression dans ladite seconde chambre de combustion (36, 36') sur ledit au moins un second orifice (206).

3. Moteur de fusée (10) tel qu'exposé dans l'une ou l'autre des revendications 1 ou 2, dans lequel ladite restriction d'écoulement (40) comprend une turbine (40) ayant une entrée et une sortie, ladite entrée est en communication fluidique avec ladite sortie (39) de ladite première chambre de combustion (34, 34'), et ladite seconde chambre de combustion (36, 36') est en communication fluidique avec ladite sortie de ladite turbine (40), de sorte que ladite turbine (40) est entraînée par au moins une partie de ladite seconde partie (210) dudit effluent (38) provenant de ladite première chambre de combustion (34, 34').

4. Moteur de fusée (10) tel qu'exposé dans l'une quelconque des revendications 1 à 3, comprenant en outre une source (22, 22') d'un premier composant propulsif (18, 18'), dans lequel ladite source (22, 22') dudit premier composant propulsif (18, 18') est en communication fluidique avec ladite première chambre de combustion (34, 34') et avec ledit premier passage annulaire (198), de sorte qu'en fonctionnement, une partie (185) dudit premier composant propulsif (18, 18') s'écoule dans ledit premier passage annulaire (198), dans ledit second passage annulaire (204), à travers ledit au moins un second orifice (206), et dans ladite seconde chambre de combustion (36, 36') de manière à permettre un refroidissement par effusion de ladite seconde chemise de chambre de combustion (208).

5. Moteur de fusée (10) tel qu'exposé dans l'une quelconque des revendications 1 à 4, comprenant également une source (24, 24') d'un second composant propulsif (20, 20'), dans lequel ladite source (24, 24') dudit second composant propulsif (20, 20') est en communication fluidique avec ladite première chambre de combustion (34, 34'), de sorte qu'en fonctionnement, une première partie dudit second composant propulsif (20, 20') s'écoule dans ladite première chambre de combustion (34, 34'), et une seconde partie restante dudit second composant propulsif (20, 20') s'écoule dans ladite seconde chambre de combustion (36, 36'), dans lequel une température de combustion dans ladite première chambre de combustion (34, 34') est inférieure à une température de combustion dans ladite seconde chambre de combustion (36, 36').

6. Moteur de fusée (10) tel qu'exposé dans l'une quelconque des revendications 1 à 5, dans lequel ladite seconde partie dudit second composant propulsif (20, 20') s'écoule- dans ladite seconde chambre de combustion (36, 36') à un emplacement intermédiaire de ladite seconde chambre de combustion (36, 36') de sorte que la combustion d'une première partie d'une seconde partie (210) dudit effluent (38) provenant de ladite première chambre de combustion (34, 34') est isolée de ladite seconde chemise de chambre de combustion (208) par un effluent (38) choisi parmi le groupe constitué d'une seconde partie de ladite seconde partie (210) dudit effluent (38) provenant de ladite première chambre de combustion (34, 34'), et de ladite première partie (194, 212) dudit effluent (38) provenant de ladite première chambre de combustion (34, 34').

7. Procédé de refroidissement d'un moteur de fusée (10), comprenant :
a. la génération d'un effluent (38) dans une première chambre de combustion (34, 34') par combustion partielle d'une pluralité de composants propulsifs (18, 18', 20, 20'), dans lequel ladite première chambre de combustion (34, 34') a une première chemise de chambre de combustion (188) comprenant au moins un premier orifice (196), ledit au moins un premier orifice (196) est en communication fluidique avec une première zone (198) à l'extérieur de ladite première chemise de chambre de combustion (188) ;
b. l'évacuation d'une première partie (210) dudit effluent (38) provenant de ladite première chambre de combustion (34, 34') dans une seconde chambre de combustion (36, 36'), dans lequel ladite seconde chambre de combustion (36, 36') a une seconde chemise de chambre de combustion (208), ladite première zone (198) à l'extérieur de ladite première chemise de chambre de combustion (188) est en communication fluidique avec une seconde zone (204) à l'extérieur de ladite seconde chemise de chambre de combustion (208), ladite seconde chemise de chambre de combustion (208) comprend au moins un second orifice (206) entre ladite seconde zone (204) et ladite seconde chambre de combustion (36, 36') ; et
c. l'évacuation d'une seconde partie (194, 212) dudit effluent (38) provenant de ladite première chambre de combustion (34, 34') à travers ledit au moins un premier orifice (196), à travers ladite première zone (198) et sur l'extérieur d'au moins une partie de ladite première chemise de chambre de combustion (188), à travers ladite seconde zone (204) et sur l'extérieur d'au moins une partie de ladite seconde chemise de chambre de combustion (208), à travers ledit au moins un second orifice (206), et dans ladite seconde chambre de combustion (36, 36'), de manière à permettre un refroidissement par effusion de ladite seconde chemise de chambre de combustion (208).

8. Procédé de refroidissement d'un moteur de fusée (10) tel qu'exposé dans la revendication 7, dans lequel ladite première partie (210) dudit effluent (38) est évacuée de ladite première chambre de combustion (34, 34') dans ladite seconde chambre de combustion (36, 36') à travers une restriction d'écoulement (40), de sorte qu'une pression dudit effluent (38) dans ladite première chambre de combustion (34, 34') sur ledit au moins un premier orifice (196) est supérieure à une pression dans ladite seconde chambre de combustion (36, 36') sur ledit au moins un second orifice (206).

9. Procédé de refroidissement d'un moteur de fusée (10) tel qu'exposé dans l'une ou l'autre des revendications 7 ou 8, dans lequel ladite pluralité de composants propulsifs (18, 18', 20, 20') comprend un combustible (20, 20') et un comburant (18, 18'), et un rapport dudit combustible (20, 20') et dudit comburant (18, 18') dans ladite première chambre de combustion (34, 34') est substantiellement riche en combustible comparé à un rapport stoechiométrique.

10. Procédé de refroidissement d'un moteur de fusée (10) tel qu'exposé dans la revendication 9, dans lequel une première partie dudit combustible (20, 20') est évacuée dans ladite première chambre de combustion (34, 34'), et une seconde partie (185) dudit combustible (20, 20') est évacuée dans ladite première zone (198) à l'extérieur de ladite première chemise de chambre de combustion (188).

11. Procédé de refroidissement d'un moteur de fusée (10) tel qu'exposé dans l'une ou l'autre des revendications 9 ou 10, comprenant en outre l'évacuation d'au moins une partie d'un comburant (18, 18') dans ladite seconde chambre de combustion (36, 36'), et la modification d'au moins une caractéristique de ladite première partie (210) dudit effluent (38) provenant de ladite première chambre de combustion (34, 34') dans ladite seconde chambre de combustion (36, 36') par ladite opération d'évacuation de ladite partie dudit comburant (18, 18') dans ladite seconde chambre de combustion (36, 36'), dans lequel ladite au moins une caractéristique est choisie parmi le groupe constitué d'un modèle d'écoulement et d'un modèle de mélange.

12. Procédé de refroidissement d'un moteur de fusée (10) tel qu'exposé dans l'une quelconque des revendications 7 à 11, comprenant en outre la modification d'au moins une caractéristique de ladite première partie (210) dudit effluent (38) provenant de ladite première chambre de combustion (34, 34') dans ladite seconde chambre de combustion (36, 36') par ladite opération d'évacuation de ladite seconde partie (194) dudit effluent (38) à travers ledit au moins un second orifice (206) dans ladite seconde chambre de combustion (36, 36'), dans lequel ladite au moins une caractéristique est choisie parmi le groupe constitué d'un modèle d'écoulement et d'un modèle de mélange.
